# EUROPEAN PATENT APPLICATION

(11) **EP 4 219 626 A1**
(43) Date of publication of application: **02.08.2023**
(21) Application number: 22153644.4
(22) Date of filing: 27.01.2022
(51) Int. Cl.: C08L 67/02, B29C 49/00, B65D 8/00, B65D 8/02

(54) **COLLAPSIBLE BEVERAGE CONTAINER AND METHOD OF MANUFACTURE**

(71) Applicant: Carlsberg Breweries A/S, 1799 Copenhagen V (DK)
(72) Inventor: Tinning, Jane, 1799 Copenhagen V (DK); Ahlgren, Kristina, 1799 Copenhagen V (DK)
(74) Representative: Nordic Patent Service A/S

(57) **Abstract**

A collapsible beverage container and method of manufacture thereof, the beverage container being made from a polymer composition of virgin polyethylene terephthalate (vPET), recycled polyethylene terephthalate (rPET), and a scavenging additive configured to prevent O₂ ingress and CO₂ loss. The rPET is present in the polymer composition in an amount of 35 wt% to 70 wt%, more preferably 50 wt%. The polymer composition may comprise rPET pellets and/or rPET flakes, preferably in an equal amount. The scavenging additive is MXD6 nylon or a non-nylon containing scavenging additive specifically formulated for use with rPET, preferably present in an amount of 4 wt% to 6 wt%. The beverage container is a monolayer container, and the method of manufacture comprises stretch blow moulding a preform prepared via injection or extrusion blow moulding.

## Description

### TECHNICAL FIELD

The disclosure relates to a collapsible beverage container for a carbonated beverage, and more particularly to a polymer composition for use in preforms for collapsible beverage containers and a method for manufacturing collapsible beverage containers.

### BACKGROUND

Beverage dispensing systems are typically used in beverage dispensing establishments for efficiently dispensing large quantities of beverage, including carbonated alcoholic beverages such as draught beer and cider, non-alcoholic beverages such as soft drinks and non-carbonated beverages such as wine and fruit juice. These beverage dispensing systems had traditionally been used by professional users in establishments like bars, restaurants and hotels. However, there is an increasing need by private persons to also use beverage dispensing systems at home, such as beer drafting units with replaceable beer kegs.

Conventional beverage dispensing systems operate with rigid beverage containers made from materials such as glass, plastics or metal. When dispensing the beverage a gas may be injected into the container to replace the drained beverage for pressure equalization and to aid dispensing. The gas may be injected with a high pressure, thereby acting to push out the beverage. Such principle is typical for a conventional beer dispensing system.

When supplying relatively large amounts of beverage in the order of tens of litres to be used in beverage dispensing systems, it is known to use refillable steel containers (in the case of beer and such carbonated beverages) or heavy duty refillable or recyclable plastic containers (in the case of water for water dispensers). These types of beverage containers come with some disadvantages in that they are costly to produce and to keep in stock for a supplier of beverage, and after they have been emptied and prior to their return trip they demand a large storage volume for an end user. The stainless steel kegs suffer from a number of further drawbacks, including the considerable weight of the kegs that can be problematic from both a manual handling and a cost-oftransportation perspective, and the high cost of metal kegs and their high "scrap metal" value, which makes them susceptible to theft.

In an attempt to address one or more of the above problems, it has been a trend to use high-impact polymers, typically polyethylene and polypropylene, which are thermoplastic materials that can be readily injection- or blow-moulded. Particularly polymer resins, such as polyethylene terephthalate (PET), are widely used due to their advantageous characteristics such as toughness, clarity, good barrier properties, light weight, design flexibility, chemical resistance and good shelf-life performance. Furthermore, PET is environmentally friendly since it can often be recycled. These characteristics of PET make it a popular material in the manufacturing of beverage containers.

When non-carbonated or low-carbonated beverages have been filled in plastic beverage containers, it has been traditionally necessary to use a container with relatively thick walls in order to ensure manageability and stability so that the container does not collapse when being handled. Thick-walled containers however result in increased production and transportation costs and demand larger resources in terms of storage and disposal systems.

WO 00/78665 discloses a beer container or keg comprising an inner hollow shell of blow moulded PET, and a rigid outer hollow shell of moulded high-density polyethylene enclosing and supporting the inner shell. This solution addresses the problems associated with steel containers but still only provides a partial solution since the container still is a relatively expensive and elaborate construction that also requires large storage space at the side of the end consumer.

Novel dispensing systems, such as a DraughtMaster System produced by the applicant company are described in WO2007/019848, WO2007/019849, WO2007/019850, WO2007/019851 and WO2007/019853, avoid the above problems by working with beverage containers made of a thermoplastic material that can be collapsed during dispensing by high-pressurized air. The collapsible beverage container is typically made of thin and flexible thermoplastic material and may even be in the form of a plastic bag. The beverage dispensing systems using collapsible beverage containers can have the containers installed or placed in a pressure chamber. While performing a dispensing operation, the pressure applied causes the beverage to flow out of the beverage keg and into a dispensing line. The beverage in such dispensing systems is thus dispensed without any contact with the air, ensuring that no low pressure is generated and therefore there is no need for injecting gas into the beverage container itself.

One drawback of the above system is the need for relatively thin beverage containers, as they need to be collapsible. There is an apparent risk that such thin containers may burst, either during transportation of the beverage container or during dispensing as the beverage container is collapsed. A rupture of the beverage container will possibly lead to beverage leaking from the container and damaging external equipment and apparatus.

Another drawback associated with this technology is the lack of barrier for CO2 and O2 within the container walls, and lack of barrier for certain wavelengths of light, which can rapidly deteriorate the taste of the beverage, especially when the container is used for carbonated beverages. In particular, PET is gas permeable, and when used to hold a carbonated beverage, the sidewalls of a PET container must be thicker than certain minimum sizes if the bottle is to meet industry standards relating to carbon dioxide retention levels. For example, as defined by the industry, the term "shelf life" for a carbonated beverage bottle is the time, in weeks, for the beverage to lose 15 percent of its original carbonation level, when stored at room temperature. The major carbonated soft drink manufacturers in the United States have established a requirement that a PET beverage container larger than one liter, when used to package a carbonated drink, must have a shelf life of 16 weeks.

To solve this problem, traditionally metal or glass containers have been used to achieve appropriate barrier and mechanical properties. The use of containers of metal and glass are however disadvantageous for reasons discussed above, and in some dispensing systems even impossible. To be able to combine the advantages of a rigid metal or glass container with the advantages of a collapsible container, barrier layers such as a CO2 and O2 barrier have been proposed to be used in the walls of thermoplastic beverage containers for prolonging the shelf life of the beverage contained within. These barrier layers are however usually used in multiple-layered laminated containers, where the bottle comprises at least one layer formed from PET and another layer formed from a material such as nylon which has a very low gas permeability.

This solution still carries some drawbacks such as complex and expensive manufacture, and low flexibility to stresses induced by inner our outer pressure or temperature changes.

Furthermore, there is an emerging need for increasing environmental sustainability of the manufacture of beverage containers, in particular increasing recyclability of containers made of thermoplastic materials. For this reason, nylon and similar barrier materials should be gradually replaced with non-nylon containing scavengers, and beverage containers should be designed to be more recyclable in a chemical or mechanical manner, and produced by at least partially re-using materials reclaimed from disposed containers.

Consequently, there exists a need for a solution to be able to produce a large sized collapsible beverage container suitable for carbonated beverages that has relatively thin walls, a long shelf-life, that remains flexible and does not burst when pressurized from the inside and outside, and which is environmentally friendly both for manufacturing and for disposal.

### SUMMARY

It is therefore an object of the present disclosure to provide an improved beverage container that addresses the problems mentioned above and eliminates at least some of the prior art limitations in relation to the polymer compositions used in beverage containers, in particular PET containers.

The foregoing and other objects are achieved by the features of the independent claims. Further implementation forms are apparent from the dependent claims, the description and the figures.

According to a first aspect, there is provided a collapsible beverage container comprising a polymer composition, the polymer composition comprising a first polymer consisting of virgin polyethylene terephthalate, a second polymer consisting of recycled polyethylene terephthalate, and a scavenging additive configured to prevent O2 ingress and CO2 loss. The second polymer is present in the polymer composition in an amount of 35 wt% to 70 wt% by weight of the beverage container.

It has surprisingly been found that a beverage container of this composition provides a good CO2 and O2 barrier, while still being flexible to expand and retract to a certain limit when pressure and/or temperature increases (e.g. to 3 bars when the container is pressed to dispense beverage), without losing it elasticity. In particular, the barrier remains flexible over a longer time period (from 30 days up to even 9 months), in order to maintain CO2 level and make sure that O2 in not entering the container, which will secure the quality of the beverage. This is in contrast with traditional PET beverage containers that are typically used within a short time period.

The beverage container can furthermore collapse when emptied, while still keeping its barrier properties. Finally, the composition ensures food approval for storing beverages for human consumption, as well as avoiding off taste for the beverages to be contained within. The resulting containers be distributed in large dispense packages and can be used by end users for consuming a beverage, such as beer or any other carbonated alcoholic or non-alcoholic beverage, made ready for consumption, by including any necessary CO2 and sealing at the production site before shipment. This ensures that no additional CO2 comes in contact with the beverage during dispense, which provides for a freshness and long-lasting beverage quality over 6-7 times longer than existing steel keg-based dispense systems.

In a possible implementation form of the first aspect the second polymer is present in the polymer composition in an amount of 50 wt% by weight of the beverage container.

In a possible implementation form of the first aspect the second polymer comprises rPET pellets in an amount of 17,5 wt% to 35 wt% by weight of the beverage container, preferably in an amount of 25 wt% by weight of the beverage container.

In an embodiment the rPET pellets are EcoClear E04 100 pellets.

In a possible implementation form of the first aspect the second polymer comprises rPET flakes in an amount of 17,5 wt% to 35 wt% by weight of the beverage container, preferably in an amount of 25 wt% by weight of the beverage container.

In an embodiment the rPET flakes are EcoClear E04 100 flakes.

In an embodiment the rPET is post-consumer food grade rPET recycled via a mechanical or chemical route.

In an embodiment the vPET is Polyshield resin, more preferably Polyshield 2300 resin.

In a possible implementation form of the first aspect the scavenging additive is present in an amount of 1 wt% to 10 wt% by weight of the beverage container, more preferably in an amount of 4 wt% to 6 wt% by weight of the beverage container.

In an embodiment the scavenging additive is an active scavenger. In an alternative embodiment the scavenging additive is a passive scavenger.

In a possible implementation form of the first aspect the scavenging additive is MXD6 nylon that is present in an amount of 4,5% or 6% by weight of the beverage container.

In a possible implementation form of the first aspect the scavenging additive is a non-nylon containing scavenging additive specifically formulated for use with rPET, such as Amosorb 4020R, that is present in an amount of 4 to 6 wt% by weight of the beverage container. This ensures further compliance with future environmental regulations, and provides further increase of recyclability of the beverage containers.

In a possible implementation form of the first aspect the beverage container is a monolayer beverage container.

In an embodiment the beverage container is substantially transparent. The transparent beverage container can be configured to be stored and transported in a non-transparent container box arranged to fit at least one beverage container. In an embodiment this non-transparent container box is made of cardboard.

In an alternative embodiment the beverage container is non-transparent.

In a possible implementation form of the first aspect the beverage container has a net fill capacity of at least 5 litres, preferably between 5 to 25 litres, more preferably between 10 to 20 litres.

In a possible implementation form of the first aspect the beverage container comprises a cylindrical neck with an opening for filling and dispensing a beverage; a circular bottom; and a body extending between the neck and the bottom and having a diameter larger than that of the neck.

In an embodiment the body arranged in the shape of a pressure vessel with a cylindrical middle portion, a dome-shaped base portion connecting to the bottom, and a dome-shaped shoulder portion connecting to the neck.

In an embodiment the bottom comprises an inwardly protruding dome-shaped depression.

In an embodiment the beverage container has a net fill capacity of 20 litres, wherein the beverage container has a length L in the range of L = 550-578 mm, preferably Lb = 560 mm; and a diameter D in the range of D = 220-250 mm, preferably D = 235 mm.

In an embodiment the body of the beverage container has a length Lb in the range of Lb = 520-550 mm, preferably Lb = 533 mm; and the neck of the beverage container has a length Ln in the range of Ln = 20-50 mm, preferably Ln = 34 mm.

In a possible implementation form of the first aspect the beverage container has different wall thickness at the neck than at the body, the wall thicknesses being in the range of Tn = 1.2-1.6 mm at the neck; and Tb = 0.25-0.5 mm, preferably between Tb = 0.32-0.42 mm, at the body.

In a possible implementation form of the first aspect the body of the beverage container comprises a neck ring zone extending from the neck towards the bottom, the neck ring zone having a visibly increased wall thickness with respect to the adjacent surface of the body; wherein the distance between the neck and the outer circumference of the neck ring zone is preferably between 10 to 20 mm measured along the surface of the body.

In an embodiment the neck comprises at least one circular rim, preferably two rims, protruding radially outwards from the surface of the neck.

In a possible implementation form of the first aspect the body of the beverage container comprises a bottom ring zone extending from the bottom towards the neck, the bottom ring zone having a visibly increased wall thickness with respect to the adjacent surface of the body; wherein the diameter of the bottom ring zone is preferably between 30 to 50 mm.

In a possible implementation form of the first aspect the beverage container is configured to have a maximal thermal expansion ratio of 2,1%, more preferably 1,5%, wherein the thermal expansion ratio is measured as a relative value of the largest diameter and the largest length of the beverage container.

In a possible implementation form of the first aspect the beverage container is configured to expand without losing its elasticity when subjected to up to at least 5.8 bars of inside pressure, more preferably at least 6.5 bars and up to 8 bars of inside pressure.

In a possible implementation form of the first aspect the beverage container is configured to collapse without losing its elasticity and remain resistant to O₂ ingress and CO₂ loss when subjected to outside pressure of up to 3.0 bars.

In an embodiment the beverage container is configured to expand and retract without losing its elasticity between temperature ranges of at least between 5-33 degrees Celsius, more preferably between temperature ranges of 0-50 degrees Celsius.

According to a second aspect, there is provided a method for preparing a preform for a beverage container, the method comprising the steps of blending a first polymer consisting of virgin polyethylene terephthalate, a second polymer consisting of recycled polyethylene terephthalate, and a scavenging additive into a preform blend; and moulding the preform blend via injection or extrusion blow moulding to form a preform; wherein the preform blend comprises rPET in an amount of 35 wt% to 70 wt% by weight of the beverage container.

According to a third aspect, there is provided a method for manufacturing a beverage container for a carbonated beverage, the method comprising the steps of preparing a preform according to the second aspect; heating and conditioning the preform to achieve a temperature in the range of 90 to 110 degrees Celsius, more preferably 95 to 105 degrees Celsius; placing the preform in a mold in the form of a beverage container; biaxially stretching the preform along a first axis and a perpendicular second axis to fill the mold and produce a beverage container; cooling the produced beverage container; and removing the cooled beverage container from the mold.

In an embodiment the preform is stretched biaxially in the mold using a rod for stretching along a vertical first axis and using a gas blown into the preform for stretching along a horizontal second axis.

In an embodiment the beverage container is cooled before removing from the mold with cooling water of a temperature between 8-12 degrees Celsius.

In a possible implementation form of the third aspect the preform comprises an internal surface and an external surface, and heating and conditioning the preform comprises applying a thermal inversion, whereby a temperature gap is achieved between a higher temperature internal surface and a lower temperature external surface, the temperature gap being between 5-15 degrees Celsius, more preferably between 11-13 degrees Celsius.

In a possible implementation form of the third aspect heating and conditioning the preform comprises heating the internal surface to a temperature between 100-110 degrees Celsius, more preferably between 103-107 degrees Celsius, most preferably to 105 degrees Celsius; while heating the external surface to a temperature between 90-100 degrees Celsius, more preferably between 93-97 degrees Celsius, most preferably to 95 degrees Celsius.

In a possible implementation form of the third aspect heating and conditioning the preform comprises at least one heating phase and at least one conditioning phase, wherein during a heating phase both the internal surface temperature and an external surface temperature is increased, and during a conditioning phase the internal surface temperature is stagnant or increased while the external surface temperature is decreased.

In an embodiment heating and conditioning the preform comprises a first heating phase, a first conditioning phase, a second heating phase, and a second conditioning phase, wherein the second conditioning phase is ended when a desired temperature gap is achieved.

In a possible implementation form of the third aspect heating and conditioning the preform comprises arranging the preform vertically in a heating device, the heating device comprising at least one set of infrared lamps arranged along a vertical axis and configured to radiate towards the preform; and rotating the preform within the heating device around a vertical rotational axis while applying infrared radiation from the at least one set of infrared lamps.

In a possible implementation form of the third aspect the heating device comprises an inner wall, the inner wall being provided with a non-focusing reflective surface configured to reflect radiation from the infrared lamps.

In an embodiment the infrared lamps are arranged with a variable distance from the inner wall.

In an embodiment the infrared lamps are arranged to emit infrared light at different wavelengths.

In a possible implementation form of the third aspect heating and conditioning the preform further comprises applying cooling within the heating device to avoid crystallization of the external surface of the preform.

In an embodiment the heating device comprises a source of cooling air for applying cooling within the heating device.

In an embodiment the preform comprises a preform neck and a preform body, wherein during the heating and conditioning of the preform only the preform body is heated to a temperature range of 95 to 105 degrees Celsius, while the preform neck is kept at a maximum temperature of 50 degrees Celsius, preferably using thermally insulating protective means arranged between the preform neck and any heating means such as the infrared lamps.

According to a fourth aspect, there is provided a use of a collapsible beverage container according to any one of the possible implementation forms of the first aspect, for storing and dispensing a carbonated beverage, preferably a carbonated alcoholic beverage, such as beer.

In an embodiment the carbonated beverage comprises CO₂ in the range of 1-10 g/l, more preferably 5.5 g/l.

According to another aspect, there is provided a collapsible beverage container comprising container walls, the container walls comprising a polymer composition. The polymer composition comprises virgin polyethylene terephthalate, vPET, recycled polyethylene terephthalate, rPET, and a scavenging additive configured to prevent O2 ingress and CO2 loss, wherein rPET is present in the polymer composition in an amount of 35 wt% to 70 wt% by weight of the beverage container walls.

These and other aspects will be apparent from the embodiment(s) described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 shows an illustration of a polymer composition in accordance with an example of the disclosure;
Fig. 2 shows a side view of a preform for manufacturing a beverage container in accordance with an example of the disclosure;
Fig. 3 shows a side view of a beverage container in accordance with an example of the disclosure;
Fig. 4 shows a cross-sectional view of a beverage container in accordance with an example of the disclosure;
Fig. 5 shows a cross-sectional view of a heating device for preparing a preform of a beverage container in accordance with an example of the disclosure;
Fig. 6 illustrates exemplary absorption rates of PET materials regarding light at different wavelengths;
Fig. 7 shows a flowchart of a method of manufacturing a beverage container in accordance with an example of the disclosure;
Figs. 8A to 8D illustrate steps of stretch-blow moulding a preform to produce a beverage container in accordance with an example of the disclosure;
Fig. 9 illustrates heating and conditioning a preform of a beverage container in accordance with an example of the disclosure;
Fig. 10 shows a cross-section of a beverage dispensing system with an installed beverage container in accordance with an example of the disclosure;
Fig. 11 shows a cross-section of a beverage dispensing system while dispensing beverage from a beverage container in accordance with an example of the disclosure;
Fig. 12 shows a technical data sheet illustrating the properties of EcoClear E04 100 to be used in a beverage container in accordance with an example of the disclosure;
Fig. 13 shows a technical data sheet illustrating the properties of Polyshield resin 2300 to be used in a beverage container in accordance with an example of the disclosure; and
Fig. 14 shows a technical data sheet illustrating the properties of MX-Nylon Grade S6007 to be used in a beverage container in accordance with an example of the disclosure.

### DETAILED DESCRIPTION

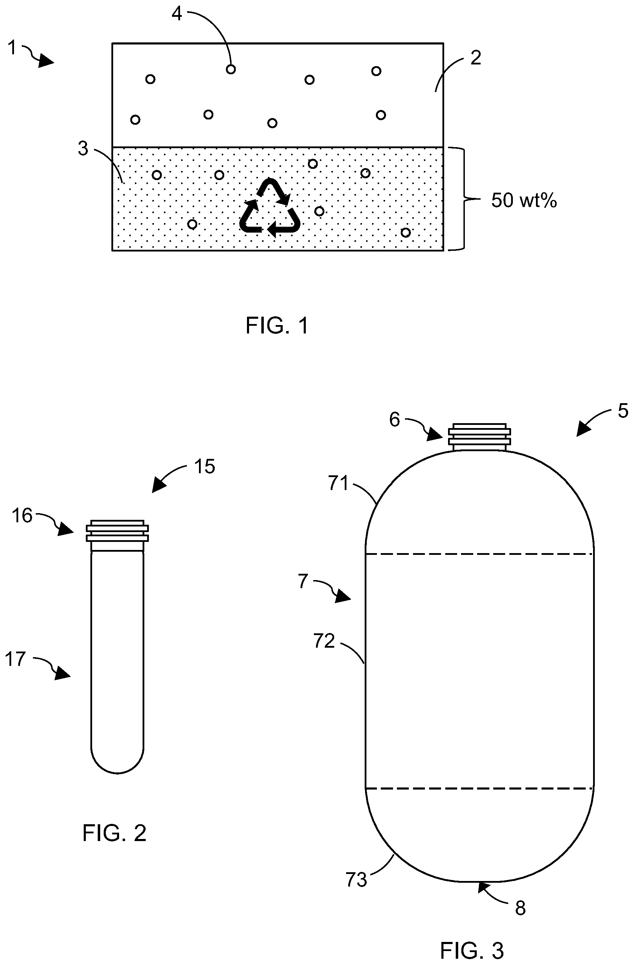

Fig. 1 shows an illustration of a polymer composition 1 according to an embodiment of the present disclosure, for manufacturing a collapsible beverage container 5 such as illustrated in Fig. 3, or a preform 15 for a beverage container such as illustrated in Fig. 2.

The polymer composition 1 comprises a "virgin" first polymer 2, i.e. non-reclaimed polymer, such as virgin polyethylene terephthalate (vPET), and a second polymer 3 from a reclaimed source, such as recycled polyethylene terephthalate (rPET). The second polymer 3 is present in the polymer composition 1 in an amount in the range of 35 wt% to 70 wt% by weight of the beverage container 5. More preferably, as illustrated in Fig. 1, the recycled second polymer 3 is present in the polymer composition 1 in an amount of 50 wt% by weight of the beverage container 5.

Virgin PET (vPET) is an approved polymer by most authorities such as the FDA for use in contact with foodstuffs. Containers made of vPET are generally transparent, thin-walled, lightweight, and have the ability to maintain their shape by withstanding the force exerted on the walls of the container by pressurized contents, such as carbonated beverages. Such vPET resins are also fairly inexpensive and easy to process. The vPET resins may be obtained in the form of a solid, e.g. a solid-form polyester resin, which may be prepared and transported in the form of chips or pellets.

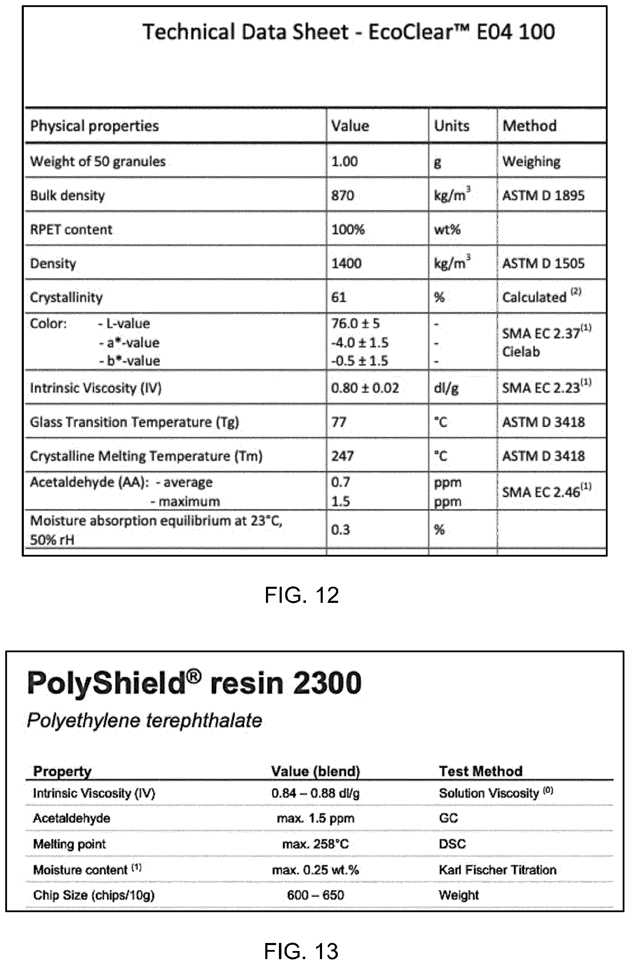

In an embodiment the vPET is Polyshield resin, more preferably Polyshield resin 2300, characterized by properties shown in Fig. 13.

In an embodiment the rPET used in the polymer composition 1 is post-consumer (PC) food grade rPET recycled via a mechanical or chemical route. In an embodiment the second polymer 3 comprises rPET sourced as non-food grade and handled with known methods in the field to achieve food-grade quality as part of preparing the second polymer 3 for blending in the polymer composition 1.

It is noted that PET (either virgin PET or rPET) is recyclable, for example by the mechanical route, a chemical route and/or a microbiological route. The chemical route involves depolymerizing to recover monomers. The monomers can be re-polymerized to obtain a recycled fresh polymer. For example, PET or rPET can be depolymerized by hydrolysis, methanolysis, glycloysis, ammonolysis or aminolysis to obtain recycled terephthalic acid or a diester thereof and recycled monoethylene glycol. The recycled terephthalic acid or diester and/or the recycled monoethylene glycol can be repolymerized, optionally with adding some virgin terephthalic acid or diester and/or the monoethylene glycol. Similarly, the microbiological route involves treating the stream of material by micro-organisms to obtain depolymerized oligomers or monomers, and then repolymerizing said monomers or oligomers, optionally with adding some virgin monomers or oligomers.

The second polymer 3 may comprise rPET pellets and/or rPET flakes. In particular, rPET pellets of a food grade (approved to be used to pack food and beverages) are today a material with a volatile price picture and with very high demands, making it challenging to get access to for manufacturers. Hence it is advantageous to replace a certain portion of rPET pellets with rPET flakes as they may be easier to get access to than rPET pellets.

In certain embodiments the second polymer 3 comprises EcoClear E04 100 pellets and/or EcoClear E04 100 flakes.

EcoClear E04 100 is a recycled medium viscous PET produced out of 100% post consumer bottle flake, which can be supplied as pre-crystallized pellets or flakes. EcoClear E04 100 is a transparent, colorless material with a low crystallization rate, approved for direct food-contact applications, and suitable for the injection-molding of preforms and the extrusion of sheet. Further technical details are shown in the Technical Data Sheet illustrated in Fig. 12.

In an example the second polymer 3 may comprise rPET pellets in an amount of 17,5 wt% to 35 wt% by weight of the beverage container 5, preferably in an amount of 25 wt% by weight of the beverage container 5; and/or rPET flakes in an amount of 17,5 wt% to 35 wt% by weight of the beverage container 5.

In an example the second polymer 3 may comprise rPET pellets in an amount of 25 wt% and rPET flakes in an amount of 25 wt% by weight of the beverage container 5.

In an embodiment, the collapsible beverage container 5 according to the disclosure is used for storing and dispensing a carbonated beverage, preferably a carbonated alcoholic beverage, such as beer.

In an example, the carbonated beverage comprises CO2 in the range of 1-10 g/l, more preferably 5.5 g/l.

To prevent O2 ingress into the manufactured beverage container 5 and/or to prevent CO2 loss beverage container 5 through the container walls manufactured from the from the polymer composition 1, the polymer composition 1 further comprises a scavenging additive 4.

In an embodiment the scavenging additive 4 is an active scavenger. In an alternative embodiment the scavenging additive 4 is a passive scavenger.

In an example the scavenging additive 4 is present in an amount of 1 wt% to 10 wt% by weight of the beverage container 5, more preferably in an amount of 4 wt% to 6 wt% by weight of the beverage container 5.

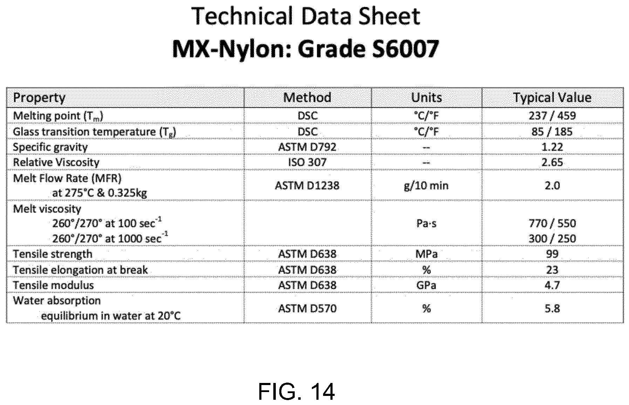

In an example the scavenging additive 4 is MXD6 (a crystalline polyamide produced by polycondensation of m-xylenediamine, i.e. MXDA, with adipic acid) nylon produced by Mitsubishi that is present in an amount of 4,5% or 6% by weight of the beverage container 5. MXD6, or MX-Nylon Grade S6007, is a food grade nylon commonly used to improve barrier performance and suitable for co-injected stretch blow bottles with PET, monolayer blend bottles with PET, and multilayer bottles or containers with PP. Further technical details are shown in the Technical Data Sheet illustrated in Fig. 14. Using the polyamide MXD6 of a low molecular weight grade is advantageous as it contributes to an increased burst pressure. In an alternative example the scavenging additive 4 is a non-nylon containing scavenging additive 4 specifically formulated for use with rPET, that is present in an amount of 4 to 6 wt% by weight of the beverage container 5.

In an exemplary embodiment the scavenging additive 4 is Amosorb 4020R. Amosorb 4020R is a non-nylon oxygen scavenger formulated by Avient to enable the use of up to 100% rPET content and to improve the aesthetics of recycled packaging in terms of haze and color and reduces the yellowing effect. Amosorb 4020R shows consistent performance with 25%, 50% and 100% rPET content, and is compatible with many different rPET grades thus helping to achieve sustainability.

An alternative example of non-nylon containing scavenging additive that may be used is OxyClear barrier resin. OxyClear barrier resin is a PET-based, monolayer oxygen ingress barrier resin that provides shelf life protection for up to 24 months. Colorless and tinted containers made using OxyClear barrier resin show the same clarity as containers made from standard PET. OxyClear barrier resin is specifically advantageous for beverage containers as it has obtained regulatory clearance for food and beverage packaging under the Federal Food, Drug, and Cosmetic Act and the European Union Packaging Directive for certain food types and processing conditions.

Further non-nylon containing scavenging additives 4 suitable for use with rPET may also be used, the above examples are intended to be non-exhaustive.

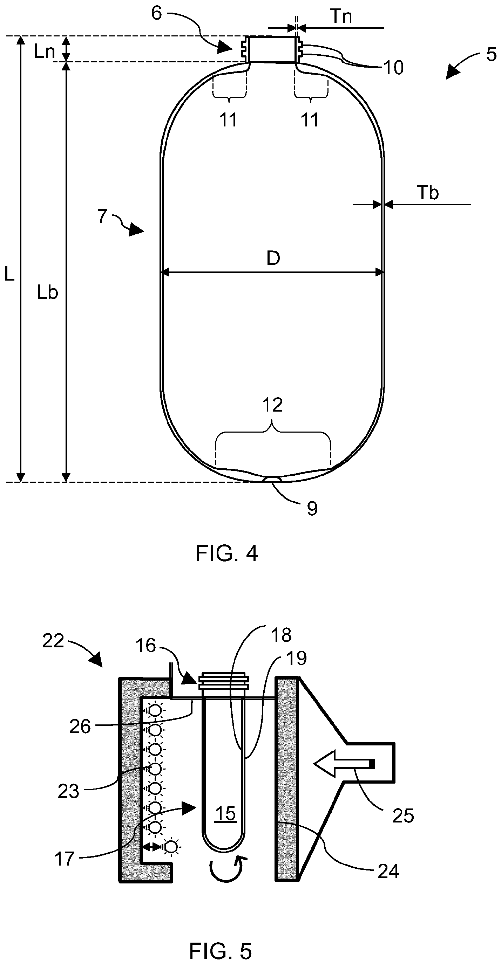

In an example the beverage container 5 is a monolayer beverage container 5, as shown in Fig. 4.

In an embodiment the beverage container 5 is substantially transparent. The transparent beverage container 5 may be configured to be stored and transported in a non-transparent container box to protect the container 5 from light exposure, wherein the container boxes are arranged to fit at least one beverage container 5. In an embodiment the non-transparent container box is made of cardboard. This allows the containers 5 to be stacked on top of each other, leading to much more efficient transportation and storage.

In an alternative embodiment the beverage container 5 is non-transparent.

The beverage container 5 is typically filled with a reference volume of the liquid and sealed. The liquid reference volume is the maximum amount of liquid comprised in the container 5, before release. The liquid reference volume is typically slightly lower than the container reference volume, as the filled and closed container 5 typically presents a head space (part or the container that is not filled). The head space is preferably of from 0% to 10% of the liquid reference volume, for example from 1 % to 10% or from 1 % to 5%. The liquid reference volume can be of from of at least 5 L, preferably between 5 to 25 L, more preferably between 10 to 20 L, for example 15 L, or for example at least 20 L.

Fig. 2 shows a side view of a preform 15 for manufacturing a beverage container in accordance with an example of the disclosure. The preform 15 comprises a preform neck 16 and a preform body 17. The preform neck 16 may serve as an inlet or outlet for the manufactured beverage container 5, as well as the receptive end for a stretching rod for a stretch-blow moulding process for manufacturing a beverage container 5 from the preform 15, while the preform body 17 serves as stretching portion that expands to take the shape of the body of a beverage container 5 during a stretch-blow moulding process, as will be shown below.

The preform 15 can be a monolayer preform, to obtain a monolayer beverage container 5. Alternatively, the preform 15 can be multilayer preform, to obtain multilayer beverage container 5. For example, the preform 15 can have a layer of vPET and a layer of rPET, preferably as an external at least partial layer.

Fig. 3 shows a side view of a collapsible beverage container 5 in accordance with an example of the disclosure. As illustrated, the beverage container 5 comprises a cylindrical neck 6 with an opening for filling and dispensing a beverage, a circular bottom 8, and a body 7 extending between the neck 6 and the bottom 8 and having a diameter larger than that of the neck 6.

In an embodiment as illustrated, the body 7 is arranged in the shape of a pressure vessel with a cylindrical middle portion 72, a dome-shaped base portion 73 connecting to the bottom 8, and a dome-shaped shoulder portion 71 connecting to the neck 6.

Fig. 4 shows a cross-sectional view of a beverage container 5 in accordance with an example of the disclosure, indicating measurements for manufacturing the beverage container 5.

In an embodiment the beverage container 5 has a net fill capacity of 20 litres, wherein the beverage container 5 has a length L in the range of L = 550-578 mm, preferably Lb = 560 mm; and a diameter D in the range of D = 220-250 mm, preferably D = 235 mm.

In an embodiment the body 7 of the beverage container 5 has a length Lb in the range of Lb = 520-550 mm, preferably Lb = 533 mm; and the neck 6 of the beverage container 5 has a length Ln in the range of Ln = 20-50 mm, preferably Ln = 34 mm.

As also shown in Fig. 4, the bottom 8 may comprise an inwardly protruding dome-shaped depression 9, which results from the stretch-blow moulding process.

Advantageously, the beverage container 5 has different wall thicknesses at the neck 6 than at the body 7. In a particular example, the wall thicknesses are in the range of Tn = 1.2-1.6 mm at the neck 6; and Tb = 0.25-0.5 mm, preferably between Tb = 0.32-0.42 mm, at the body 7.

The thickness of the blown container can be managed by adapting, for a given container reference volume, the preform, in particular its shape and wall thickness, and by adapting its stretching parameters. It is noted that the geometry of the preform, such as its length, its diameter, and its bottom shape, determine, together with the neck, the weight of the preform and thus the weight of the container.

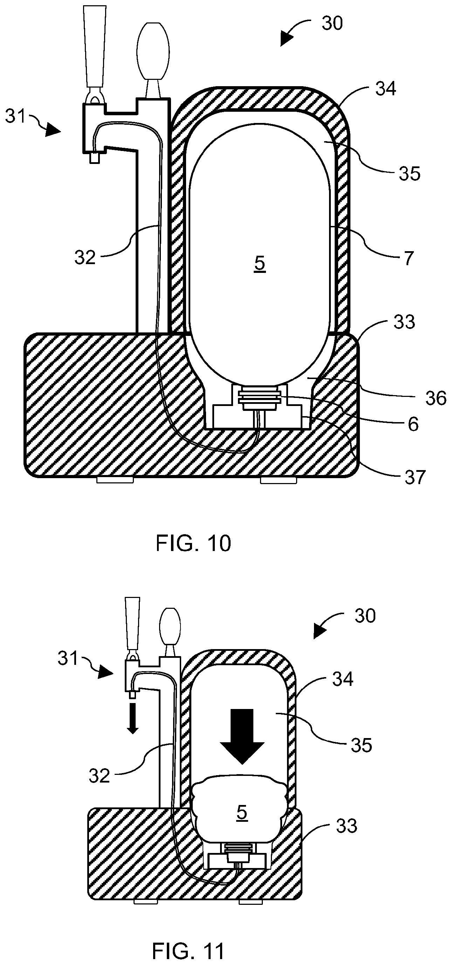

In an embodiment the neck 6 comprises at least one circular rim 10, preferably two rims 10, protruding radially outwards from the surface of the neck 6, for serving as support for installing the beverage container 5 in a beverage dispensing system, such as the system 30 shown in Figs. 10-11.

As further shown in Fig. 4, the body 7 of the beverage container 5 may comprise a neck ring zone 11 extending from the neck 6 towards the bottom 8, and having a visibly increased wall thickness with respect to the adjacent surface of the body 7, which can be inspected for quality approval during manufacture.

In an example, the distance between the neck 6 and the outer circumference of the neck ring zone 11 is between 10 to 20 mm measured along the surface of the body 7. If a produced container 5 shows neck ring zone 11 smaller than this, the produced container 5 may be rejected, while if the neck ring zone 11 extends beyond this range, it may still be accepted, if all other parameters meet specifications.

For a similar reason, the body 7 of the beverage container 5 may further comprise a bottom ring zone 12 extending from the bottom 8 towards the neck 6 and having a visibly increased wall thickness with respect to the adjacent surface of the body 7, which can also be inspected for quality approval during manufacture

In an example, the diameter of the bottom ring zone 12 is between 30 to 50 mm. If a produced container 5 shows bottom ring zone 11 smaller or larger than this in diameter, the produced container 5 may still be accepted, if all other parameters meet specifications. However, if the produced container 5 shows no bottom ring zone 12, it may be rejected.

As a further possible quality check measurement, the central point of the circular bottom 8 may also be inspected. If the central point is within 10 mm measured from the geometrical central axis it may be accepted, whereas if this offset is larger than 10 mm, the produced container 5 may be rejected.

The beverage container 5 may be manufactured to comply with further parameters. In particular, the beverage container 5 according to an example is configured to have an acceptable maximal thermal expansion ratio of 2,1%, more preferably a thermal expansion ratio below 1,5%, wherein the thermal expansion ratio is measured as a relative value of the largest diameter (D) and the largest length (L) of the beverage container 5 as shown for example in Fig. 4.

Large volume beverage containers 5, especially for use for beverages with high C02 content require a high burst pressure resistance during filling. Breweries may require a safety margin in burst pressure of e.g. 2-4 bars above the C02 pressure in the beverage. For example, during beer filling, the working pressure is about 4 bar. Accordingly, with the required safety margin of 2-4 bar, these PET containers should be able to withstand pressures of up to 6-8 bars. Further, in some cases, to increase shelf-life for C02 containing materials in large PET containers, the C02 pressure in the beverage is increased. Accordingly, a higher C02 pressure in the beverage will require an even higher final burst pressure for the beverage container 5.

Accordingly, the beverage container 5 may be configured to expand without losing its elasticity when subjected to up to at least 5.8 bars of inside pressure, more preferably at least 6.5 bars and up to 8 bars of inside pressure.

In an example, the beverage container 5 is configured to collapse without losing its elasticity and remain resistant to O₂ ingress and CO₂ loss when subjected to outside pressure of up to 3.0 bars, for example during dispensing of a beverage in a beverage dispensing system as shown in Fig. 11.

In an example, the beverage container 5 is configured to expand and retract without losing its elasticity between temperature ranges of at least between 5-33 degrees Celsius, more preferably between temperature ranges of 0-50 degrees Celsius.

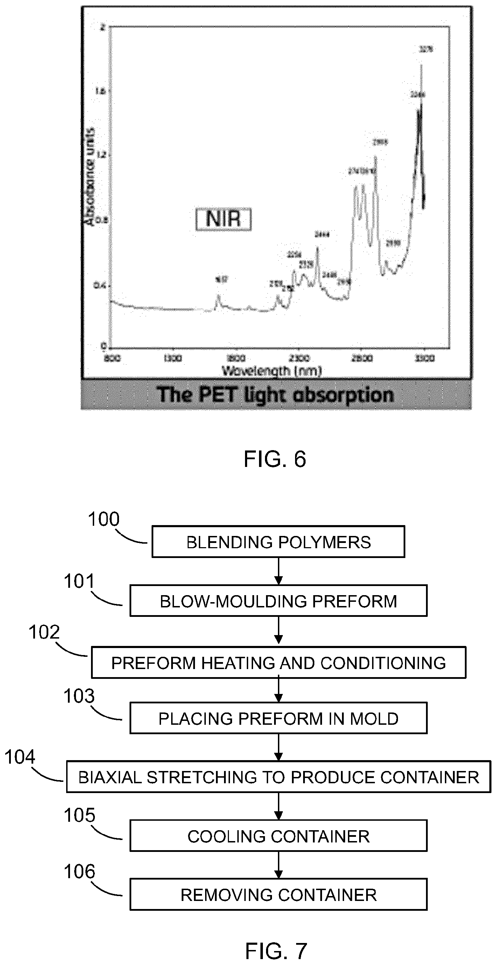

Fig. 5 shows a cross-sectional view of a heating device 22 for preparing a preform 15 of a beverage container 5 in accordance with an example of the disclosure. The particular step shown in Fig. 5 may be a part of a manufacturing method for producing a preform 15 and/or a method for manufacturing a beverage container 5, as illustrated in Fig. 7, which shows steps of a method for manufacturing a beverage container 5 in accordance with an example of the disclosure.

Most of the advantageous physical properties of PET become evident only when the resin is stretch-molded into a biaxially oriented condition, and the majority of PET bottles produced for carbonated beverages are manufactured by, first, molding a PET preform via an injection molding process, and second, reforming the preform into the final desired shape. With most PET containers a different machine is employed in each of these two manufacturing steps; however, a significant number of bi-axially oriented PET bottles are also formed in one apparatus having a plurality of positions or stations. Some PET containers not requiring high mechanical properties are produced via conventional injection blow molding and have little or no molecular orientation. The below steps illustrate an example of manufacturing a beverage container 5 according to the present disclosure, wherein a preform 15 may be prepared separately in a two-step process and stretch-blow molded in a second stage, or the preform 15 may also be prepared in the same apparatus as the final beverage container 5.

As shown in Fig. 7, preparing a preform 15 for a beverage container 5 may comprise the initial step 100 of blending a first polymer 2, such as vPET, a second polymer 3 such as rPET, and a scavenging additive 4 into a preform blend; and moulding in a next step 101 the preform blend via injection or extrusion blow moulding to form a preform 15. As described above, the preform blend may comprise rPET in an amount of 35 wt% to 70 wt% by weight of the beverage container 5.

After the preform is prepared, it can be used for manufacturing a beverage container 5, such as for use for storage and dispense of a carbonated beverage. The additional steps for this are further shown in Fig. 7.

Returning to Fig. 5, according to the method, the preform 15 is first heated and conditioned in an initial step 102 to achieve a temperature in the range of 90 to 110 degrees Celsius, more preferably 95 to 105 degrees Celsius.

For this, a heating device as shown in Fig. 5 may be used. In particular, the preform 15 may be arranged vertically in the heating device 22 comprising at least one set of irradiating means to radiate towards the preform 15.

The irradiating means may emit any relevant electromagnetic radiation such as UV, visible light or preferably and advantageously IR irradiation, consequently, the irradiation includes advantageously absorption peak wavelength or wavelengths within the infrared spectrum, as illustrated in Fig. 6.

In an example as illustrated, the irradiating means are infrared lamps 23 arranged along a vertical axis.

Once the preform 15 is placed, it is rotated within the heating device 22 around a vertical rotational axis while applying infrared radiation from the at least one set of infrared lamps 23.

The heating device 22 comprises inner walls 24, which inner walls 24 may be provided with a non-focusing reflective surface configured to reflect radiation from the infrared lamps 23 and thereby improving the efficiency of irradiation of the preform 15 in the heating device 22.

In an embodiment of the heating device 22 the infrared lamps 23 may be arranged with a variable distance from the inner wall 24 to accommodate for different shapes of the preform 15 or to adjust heating of different regions of the preform 15. In an embodiment of the heating device 22 the infrared lamps 23 may be arranged to emit infrared light at different wavelengths for further adjustability of the irradiation.

As mentioned before, Fig. 6 illustrates exemplary absorption rates of PET materials regarding light at different wavelengths for reference for the skilled person as to what wavelength configurations may be used for efficient heating of the preform 15.

As further shown in Fig. 5, the preform 15 comprises an internal surface 18 and an external surface 19. In a particular example, the heating and conditioning 102 of the preform 15 comprises applying a thermal inversion, whereby a temperature gap 20 is achieved between a higher temperature internal surface 18 and a lower temperature external surface 19. In an example, the temperature gap 20 is between 5-15 degrees Celsius, more preferably between 11-13 degrees Celsius.

In a particular example, heating and conditioning the preform 15 comprises heating the internal surface 18 to a temperature between 100-110 degrees Celsius, more preferably between 103-107 degrees Celsius, most preferably to 105 degrees Celsius; while heating the external surface 19 to a temperature between 90-100 degrees Celsius, more preferably between 93-97 degrees Celsius, most preferably to 95 degrees Celsius.

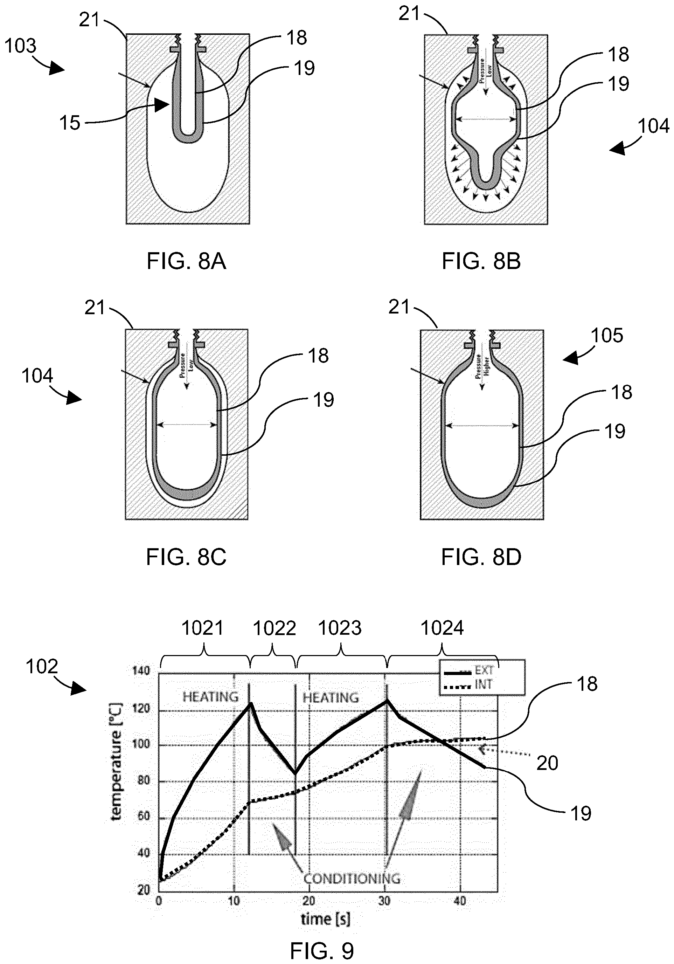

To achieve these parameters, a specific sequence of steps may be used, as illustrated in Fig. 9. These steps comprise at least one heating phase 1021 and at least one conditioning phase 1022, wherein during a heating phase both the internal surface 18 temperature (shown with a dotted line on the graph) and the external surface 19 temperature (shown with a continuous line on the graph) of the preform 15 is increased, whereas during a conditioning phase the internal surface 18 temperature is stagnant or increased while the external surface 19 temperature is decreased.

In the specific illustrated example, the heating and conditioning of the preform 15 comprises a first heating phase 1021, followed by a first conditioning phase 1022, a second heating phase 1023, and finally a second conditioning phase 1024, wherein the second conditioning phase is ended when a desired temperature gap 20 is achieved.

The heating and conditioning the preform 15 may further comprise applying cooling within the heating device 22 to avoid crystallization of the external surface 19 of the preform 15. In an embodiment the heating device 22 comprises a source of cooling air 25 for applying cooling within the heating device 22.

As mentioned before, the preform 15 comprises a preform neck 16 and a preform body 17. During the heating and conditioning of the preform 15 it is advantageous that only the preform body 17 is heated to a temperature range of 95 to 105 degrees Celsius, while the preform neck 16 is kept at a maximum temperature of 50 degrees Celsius. This can be achieved for example by using thermally insulating protective means 26 arranged between the preform neck 16 and any heating means such as the infrared lamps 23, as shown in Fig. 5.

After the heating and conditioning step, the preform 15 can be taken from the heating device 22 and placed in a next step 103 the in a mold 21 in the form of a beverage container 5, as illustrated in Fig. 8A, for the stretch-blow moulding process, to produce a beverage container 5. Stretch blow moulding is a known process for making beverage containers. During the process, the preform 15 is e.g. injection molded and thereafter internally pressurized within a blow mold in order to form a container 5. The sidewalls of the preform are materially expanded during the blow molding process causing biaxial orientation of the plastic and increase strength. However, the bottom region of the preform is not materially expanded to the same extent and, therefore, does not undergo biaxial orientation to any significant degree that will result in increased strength. Therefore, regardless of the type of material utilized, the bottom region of a container is inherently weaker than the sidewall regions forming the body.

Accordingly, after placement in the mold, the preform 15 is biaxially stretched 104 along a first axis and a perpendicular second axis to fill the mold 21 and produce a beverage container 5, as shown in Figs. 8B through 8D, to orient and align the molecules in the polymer composition 1 of the preform 15. This orientation improves the gas barrier, stiffness, clarity and impact strength of the container 5 and, as a result, containers 5 can be reduced in weight.

As known from the prior art, the preform 15 may be stretched in the mold 21 using a rod for stretching along a vertical first axis and using a gas blown into the preform 15 for stretching along a horizontal second axis.

Once the stretched preform 15 fills the mold 21, it can be cooled in step 105 before removing from the mold 21. In an example the beverage container 5 is cooled with cooling water of a temperature between 8-12 degrees Celsius.

Finally, in a last step 106 the resulting beverage container 5 can be removed from the mold 21 and used for storing and dispensing a beverage.

These process steps work well for forming beverage containers for carbonated soft drink, water, wine or beer bottles, and in particular large containers for carbonated beverages wherein a relatively high burst pressure (even 8 bars or greater) is required. The described method can be employed in any of the conventional known processes for producing a polyester-based container.

Fig. 10 shows a cross-section of an exemplary beverage dispensing system 30 with an installed collapsible beverage container 5 containing a carbonated beverage, in accordance with an example of the disclosure.

The carbonated beverage may be for example beer, a carbonated malt-based beverage, including non-alcoholic beer, or cider.

The beverage dispensing system may comprise a beverage font assembly 31 and an exchangeable, collapsible container 5 in accordance with the embodiments and examples of the present disclosure. In these embodiments, structures and features that are the same or similar to corresponding structures and features previously described or shown herein are denoted by the same reference numeral as previously used for simplicity. A tapping head for controlling the dispense of a beverage from the container 5 may be supported by a beverage font as shown in Fig. 10, or may alternatively be supportable by a body of a beverage dispensing system (not shown), where instead of using a beverage font the tapping head may be directly attached to a housing of a beverage dispensing system that can hold a beverage container.

The illustrated system comprises an exchangeable beverage container 5 for accommodating a beverage, the beverage container 5 comprising a neck 6 with a beverage outlet. The beverage container 5 may be recyclable or disposable after exchanging from an empty to a new beverage container 5. A dispensing line 32 extends from the beverage outlet, along the rear side of the beverage font, to a spout arranged in the tapping head.

As further shown in the exemplary embodiment of Fig. 10, the body of the beverage dispensing system 30 may comprise a receptacle 33 and a lid 34. The receptacle 33 is designed and shaped for receiving at least a portion of the beverage container 5, preferably a smaller portion of the beverage container 5 comprising the neck 6, in an upside-down position. The lid 34 is arranged to cover at least a portion, preferably a larger portion of the beverage container 5 when it is received in the receptacle 33.

When these two parts are connected together, using a pressureresistant connection, preferably a bayonet mount, a pressure-tight sealable enclosure 35 serving as pressure chamber is established. The housing of the body is preferably made of pressure proof materials, such as metal or rigid plastic. A bayonet mount refers to a fastening mechanism well-known in the field consisting of a cylindrical male side with one or more radial pins, and a female receptor with matching L-shaped slot and with spring to keep the two parts locked together. A keg closure cavity 36 is further arranged at the bottom of the receptacle 33, designed to accommodate at least a portion of the beverage container 5. The keg closure cavity 36 may comprise a coupler with a through-hole adapted for receiving at least one type of neck 6 of an exchangeable beverage container 5 and for allowing passage of the dispensing line 32. The coupler thus forms an access point for accessing the beverage outlet of a beverage container, and the beverage accommodated therein. The coupler may be interchangeable in order to adapt the beverage dispensing system to an exchangeable dispensing line or a fixed dispensing line, respectively.

The neck 6 of a suitable beverage container 5 is insertable into the keg closure cavity 36 and may be fixated to the coupler in a sealed and pressure-tight fit. Preferably, the neck 6 is fixated to the coupler e.g. by a screw fit, bayonet fit or the like. The neck 6 may itself provide sealing against its corresponding coupler, or alternatively, the coupler or the keg closure cavity 36 may include a sealing element, which may seal against the neck 6. As mentioned before, the neck 6 may comprise at least one circular rim 10, preferably two rims 10, protruding radially outwards from the surface of the neck 6, for serving as support for installing the beverage container 5 in the keg closure cavity 36.

The beverage containers 5 used for the system 30 may be adapted in shape and volume to the volume of the enclosure 35 realized by the receptacle 33 and the lid 34. This allows for mass production of both the beverage containers 5 and the beverage dispensing systems 30. The pressure housing of the beverage dispensing system 30 and the corresponding beverage containers 5 may be provided in different sizes.

A dispensing line 32 as mentioned before may also be provided with the beverage container 5, either as a separate item and attached to it shortly before use, e.g. using a click connection mechanism, or in an alternative embodiment the dispensing line 32 may also be permanently attached to the beverage container 5. The dispensing line 32 may then be guided through the through-hole of the coupler upon mounting the beverage container 5 in the receptacle 33.

The neck 6, as mentioned before, may seal against the pressure chamber and may provide a flange in the form of a rim 10 or multiple rims 10 or flanges onto which the beverage container 5 may rest and which may also be used for carrying the beverage container 5. The neck 6 of the beverage container 5, onto which a closure may be fixed in a fluid-tight, stable and permanent connection, is typically the same of all sizes of kegs and thus, the sole difference between the variants of the closures may be whether an integrated dispensing line, a connectable dispensing line, or an openable seal is used. Thus, identical standardized closures may be produced having a mouthpart, which may connect to standardized neck 6 parts of beverage containers 5 that may have different sizes. The closures may receive coupling parts having either a a breakable seal or an integrated dispensing line. The coupling parts may preferably be press fitted or clicked in place, however, other methods such as screw fits and welds are feasible.

Fig. 11 shows a cross-section of a beverage dispensing system 30 while dispensing beverage from a collapsible beverage container 5 in accordance with an example of the disclosure. A pressure inlet (not shown) may be adapted for receiving a pressure medium and transport the pressure medium to an interspace between the outer wall of the beverage container 5 and the inner wall of the sealable enclosure 35. The interspace is typically made as small as possible, e.g. a few millimeters of width, in order to allow a tight fit between a beverage container and a pressure chamber. The pressure inlet may form part of e.g. the receptacle 33, or the lid 34, and may optionally include a one-way valve and/or overpressure valve. The pressure medium is typically air; however, any fluid would be feasible, such as CO2, N2, water etc.

The beverage dispensing system 30 may comprise a compressor and/or a gas cylinder selectively connectable to the pressure inlet for providing the pressure medium to the interspace. In order to make the system more modular, the pressure inlet and the beverage dispensing systems may be compatible with different pressurization units. A compressor may be used when access to either mains power or battery power is available to power the compressor allowing it to pressurize the pressure chamber by taking atmospheric air from the outside, pressurize it and inject the pressurized air into the interspace of the pressure chamber. A gas cylinder may be used where no mains power is available and/or batteries are considered an inconvenient choice. The gas cylinder is pre-loaded with a pressurized gas, e.g. air, nitrogen, carbon dioxide or the like.

As shown in Fig. 11, once the pressure medium is injected into the interspace between the outer wall of the beverage container 5 and the inner wall of the sealable enclosure 35, the pressure pushes beverage from the beverage container 5 through the dispensing line 32, and beverage is dispensed via the beverage font assembly 31. During the dispensing process, the beverage container 5 may be subjected to pressure of, for example, up to 3.0 bars, upon which the beverage container 5 gradually collapses, as explained before, while still keeping its elasticity and remaining resistant to O₂ ingress and CO₂ loss.

The applied pressure for dispensing the beverage depends on the type of beverage dispensing system, as well as the temperature of the beverage container 5 and the CO2 level of the beverage to be dispensed.

After the beverage container 5 is fully collapsed, the lid 34 may be removed and the empty beverage container 5 replaced to a full beverage container 5.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

## Claims

1. A collapsible beverage container (5) comprising a polymer composition (1), the polymer composition (1) comprising:
- a first polymer (2) consisting of virgin polyethylene terephthalate, vPET,
- a second polymer (3) consisting of recycled polyethylene terephthalate, rPET, and
- a scavenging additive (4) configured to prevent O₂ ingress and CO₂ loss;
wherein the second polymer (3) is present in the polymer composition (1) in an amount of 35 wt% to 70 wt% by weight of the beverage container (5).

2. A collapsible beverage container (5) according to claim 1, wherein the second polymer (3) is present in the polymer composition (1) in an amount of 50 wt% by weight of the beverage container (5).

3. A collapsible beverage container (5) according to any one of claims 1 or 2, wherein the second polymer (3) comprises rPET pellets in an amount of 17,5 wt% to 35 wt% by weight of the beverage container (5), preferably in an amount of 25 wt% by weight of the beverage container (5).

4. A collapsible beverage container (5) according to any one of claims 1 to 3, wherein the second polymer (3) comprises rPET flakes in an amount of 17,5 wt% to 35 wt% by weight of the beverage container (5), preferably in an amount of 25 wt% by weight of the beverage container (5).

5. A collapsible beverage container (5) according to any one of claims 1 to 4, wherein the scavenging additive (4) is present in an amount of 1 wt% to 10 wt% by weight of the beverage container (5), more preferably in an amount of 4 wt% to 6 wt% by weight of the beverage container (5).

6. A collapsible beverage container (5) according to claim 5, wherein the scavenging additive (4) is MXD6 nylon that is present in an amount of 4,5% or 6% by weight of the beverage container (5).

7. A collapsible beverage container (5) according to claim 5, wherein the scavenging additive (4) is a non-nylon containing scavenging additive (4) specifically formulated for use with rPET, such as Amosorb 4020R, that is present in an amount of 4 to 6 wt% by weight of the beverage container (5).

8. A collapsible beverage container (5) according to any one of claims 1 to 7, wherein the beverage container (5) is a monolayer beverage container (5).

9. A collapsible beverage container (5) according to any one of claims 1 to 8, wherein the beverage container (5) has a net fill capacity of at least 5 litres, preferably between 5 to 25 litres, more preferably between 10 to 20 litres.

10. A collapsible beverage container (5) according to any one of claims 1 to 9, wherein the beverage container (5) comprises:
- a cylindrical neck (6) with an opening for filling and dispensing a beverage;
- a circular bottom (8); and
- a body (7) extending between the neck (6) and the bottom (8) and having a diameter larger than that of the neck (6).

11. A collapsible beverage container (5) according to claim 10, the beverage container (5) having different wall thickness at the neck (6) than at the body (7), the wall thicknesses being in the range of:
- Tn = 1.2-1.6 mm at the neck (6); and
- Tb = 0.25-0.5 mm, preferably between Tb = 0.32-0.42 mm, at the body (7).

12. A collapsible beverage container (5) according to claim 10 or 11, wherein the body (7) of the beverage container (5) comprises a neck ring zone (11) extending from the neck (6) towards the bottom (8), the neck ring zone (11) having a visibly increased wall thickness with respect to the adjacent surface of the body (7);
wherein the distance between the neck (6) and the outer circumference of the neck ring zone (11) is preferably between 10 to 20 mm measured along the surface of the body (7).

13. A collapsible beverage container (5) according to any one of claims 10 to 12, wherein the body (7) of the beverage container (5) comprises a bottom ring zone (12) extending from the bottom (8) towards the neck (6), the bottom ring zone (12) having a visibly increased wall thickness with respect to the adjacent surface of the body (7);
wherein the diameter of the bottom ring zone (12) is preferably between 30 to 50 mm.

14. A collapsible beverage container (5) according to any one of claims 1 to 13, wherein the beverage container (5) is configured to have a maximal thermal expansion ratio of 2,1%, more preferably 1,5%, wherein the thermal expansion ratio is measured as a relative value of the largest diameter and the largest length of the beverage container (5).

15. A collapsible beverage container (5) according to any one of claims 1 to 14, wherein the beverage container (5) is configured to expand without losing its elasticity when subjected to up to at least 5.8 bars of inside pressure, more preferably at least 6.5 bars and up to 8 bars of inside pressure.

16. A collapsible beverage container (5) according to any one of claims 1 to 15, wherein the beverage container (5) is configured to collapse without losing its elasticity and remain resistant to O₂ ingress and CO₂ loss when subjected to outside pressure of up to 3.0 bars.

17. A method for preparing a preform (15) for a beverage container (5), the method comprising the steps of:
- blending (100) virgin polyethylene terephthalate, vPET), recycled polyethylene terephthalate, rPET, and a scavenging additive (4) into a preform blend; and
- moulding (101) the preform blend via injection or extrusion blow moulding to form a preform (15);
wherein the preform blend comprises rPET in an amount of 35 wt% to 70 wt% by weight of the beverage container (5).

18. A method for manufacturing a beverage container (5) for a carbonated beverage, the method comprising the steps of:
- preparing a preform (15) according to claim 17;
- heating and conditioning (102) the preform (15) to achieve a temperature in the range of 90 to 110 degrees Celsius, more preferably 95 to 105 degrees Celsius;
- placing (103) the preform (15) in a mold (21) in the form of a beverage container (5);
- biaxially stretching (104) the preform (15) along a first axis and a perpendicular second axis to fill the mold (21) and produce a beverage container (5);
- cooling (105) the produced beverage container (5); and
- removing (106) the cooled beverage container (5) from the mold (21).

19. The method according to claim 18, wherein the preform (15) comprises an internal surface (18) and an external surface (19), and wherein heating and conditioning (102) the preform (15) comprises applying a thermal inversion, whereby a temperature gap (20) is achieved between a higher temperature internal surface (18) and a lower temperature external surface (19), the temperature gap (20) being between 5-15 degrees Celsius, more preferably between 11-13 degrees Celsius.

20. The method according to claim 19, wherein heating and conditioning the preform (15) comprises heating the internal surface (18) to a temperature between 100-110 degrees Celsius, more preferably between 103-107 degrees Celsius, most preferably to 105 degrees Celsius; while heating the external surface (19) to a temperature between 90-100 degrees Celsius, more preferably between 93-97 degrees Celsius, most preferably to 95 degrees Celsius.

21. The method according to any one of claims 19 or 20, wherein heating and conditioning the preform (15) comprises at least one heating phase (1021) and at least one conditioning phase (1022), wherein during a heating phase both the internal surface (18) temperature and an external surface (19) temperature is increased, and wherein during a conditioning phase the internal surface (18) temperature is stagnant or increased while the external surface (19) temperature is decreased.

22. The method according to any one of claims 18 to 21, wherein heating and conditioning (102) the preform (15) comprises:
- arranging the preform (15) vertically in a heating device (22), the heating device (22) comprising at least one set of infrared lamps (23) arranged along a vertical axis and configured to radiate towards the preform (15); and
- rotating the preform (15) within the heating device (22) around a vertical rotational axis while applying infrared radiation from the at least one set of infrared lamps (23).

23. The method according to claim 22, wherein the heating device (22) comprises an inner wall (24), the inner wall (24) being provided with a non-focusing reflective surface configured to reflect radiation from the infrared lamps (23).

24. The method according to any one of claims 22 or 23, wherein heating and conditioning the preform (15) further comprises applying cooling within the heating device (22) to avoid crystallization of the external surface (19) of the preform (15).

25. Use of a collapsible beverage container (5) according to any one of claims 1 to 16 for storing and dispensing a carbonated beverage, preferably a carbonated alcoholic beverage, such as beer.
